# EUROPÄISCHE PATENTSCHRIFT

(11) **EP 4 500 650 B1**
(45) Veröffentlichungstag und Bekanntmachung des Hinweises auf die Patenterteilung: **19.08.2026**
(21) Anmeldenummer: 23716498.3
(22) Anmeldetag: 31.03.2023
(51) Int. Cl.: H02G 3/32, H02G 3/30

(54) **HALTEVORRICHTUNG, KOMBINATION AUS EINER HALTEVORRICHTUNG UND EINER ANWENDUNGSKOMPONENTE, ELEKTRISCHE ANSCHLUSSVORRICHTUNG UND STELLANTRIEBSSYSTEM**
HOLDING DEVICE, COMBINATION OF A HOLDING DEVICE AND AN APPLICATION COMPONENT, ELECTRIC CONNECTION DEVICE, AND ACTUATOR SYSTEM
DISPOSITIF DE SUPPORT, COMBINAISON D'UN DISPOSITIF DE SUPPORT ET D'UN COMPOSANT D'APPLICATION, DISPOSITIF DE CONNEXION ÉLECTRIQUE ET SYSTÈME ACTIONNEUR

(30) Priorität: 31.03.2022 DE 102022107697
(43) Veröffentlichungstag der Anmeldung: 05.02.2025
(73) Patentinhaber: Physik Instrumente (PI) SE & Co. KG, 76228 Karlsruhe (DE)
(72) Erfinder: SANDER, Christian, 76307 Karlsbad (DE)
(74) Vertreter: Keller Schneider Patentanwaltsgesellschaft mbH
(86) Internationale Anmeldenummer: PCT/EP2023/058513
(87) Internationale Veröffentlichungsnummer: WO 2023/187177

(56) Entgegenhaltungen:
- WO-A1-2013/074626
- WO-A1-2016/203224
- CN-A- 110 797 828
- DE-A1- 3 448 084
- JP-A- 2007 032 595

## Beschreibung

Die Erfindung betrifft eine Haltevorrichtung, eine Kombination aus einer Haltevorrichtung und einer Anwendungskomponente, eine elektrische Anschlussvorrichtung und ein Stellantriebssystem mit einem Stellantrieb und mit einer Haltevorrichtung.

Aus dem allgemeinen Stand der Technik sind Kabelbinder bekannt, die an einem Abschnitt an einem Magneten befestigt sind, so dass der Magnet mit dem Kabelbinder zur Aufnahme eines Kabels an einer Oberfläche einer Anwendungskomponente fixiert werden kann.

Die CN 110 797 828 A beschreibt eine Haltevorrichtung zum Halten eines Kabels, die einen Hauptkörper, eine an einer ersten Seite des Hauptkörpers angebrachte Kabelklemme, eine an der ersten Seite des Hauptkörpers gelegene äußere magnetische Schicht und eine an einer zweiten Seite angeordnete Gruppe von drei Kugel-Aufnahmen, in die jeweils eine Kugel drehbar gelagert ist. Die zweite Seite ist entgegen gesetzt zur ersten Seite gelegen. Durch die magnetische Schicht wird die Haltevorrichtung von einer Wand aus metallischem Material magnetisch angezogen. Gleichzeitig kann die Haltevorrichtung mit den Kugeln an der Wand bewegt werden.

Eine Halterung für eine elektrische Leitung zur Anbringung an einem Helm ist aus der CN 108 897 134 A bekannt.

Die WO 2013/074626 A1 beschreibt ein Stativ zum Halten eines Tablet mit einem Vertikalstab und einem daran mit einem Gelenk angelenkten Schwenkarm. Am Schwenkarm ist ein Abstandhalter mit einer Öffnung angeordnet, mit dem der Schwenkarm am Gelenk drehbar gelagert ist (Figuren 2A und 3). In einer am Schwenkarm befestigten Buchse ist eine Hälfte einer magnetischen Kugel angeordnet, an der ein Stift strukturell befestigt ist (Figur 4). Zur Befestigung des Tablet an dem Stativ ist der Stift ist in einem Schlitz einer Platte zur Halterung des Tablet befestigt, wodurch der Stift und die Platte ein Drehgelenk um eine Bezugsachse bilden.

Die DE 34 48 084 A1 beschreibt eine Halterung für eine Leuchte. Die Halterung weist einen Magnethalter mit einer gekrümmter Kontakfläche und eine Kugel, die an der Kantaktfläche drehbar gelagert ist, auf. Durch die Kugel ist eine Kontaktstift geführt, der einerseits mit einem elektrischen Innenleiter zur elektrischen Versorgung der Leuchte und andererseits mit der Kontaktfläche verbunden ist.

Eine Anordnung eines sphärischen Körpers aus magnetischem Material und einem Lagersockel, an dem der sphärische Körper magnetisch gehalten wird, ist in der JP 2007-32595 A beschrieben.

Die WO 2016/203224 A1 beschreibt ein Anzeigegerät mit einer Anschlussvorrichtung zur Anbringung des Anzeigegeräts an einen magnetischen Sockel. Die Anschlussvorrichtung weist ein in einer Kugel-Aufnahme gelagerte magnetische Kugel auf, so dass das Anzeigegerät unter Ausbildung eines Kugelgelenks drehbar an dem Sockel gelagert werden kann.

Die Aufgabe der Erfindung ist, eine Haltevorrichtung, Kombination aus einer Haltevorrichtung und einer Anwendungskomponente, eine elektrische Anschlussvorrichtung und ein Stellantriebssystem bereitzustellen, die jeweils alternative Lösungen zu bekannten derartigen Vorrichtungen sind. Insbesondere soll an der Haltevorrichtung, an der Kombination aus einer Haltevorrichtung und einer Anwendungskomponente, an der elektrischen Anschlussvorrichtung und an dem Stellantriebssystem jeweils auf effiziente Art ein insbesondere elektrisches Kabel derart gehalten werden können, dass Bewegungsfreiheitsgrade und eine Beweglichkeit oder Bewegungen des Kabels zugelassen sind.

Nach der Erfindung ist eine Haltevorrichtung zum Halten zumindest eines Kabels vorgesehen. Die Haltevorrichtung weist auf:
ein Haltergehäuse, das als Hohlkörper ausgebildet ist und das einen ersten Aufnahmeabschnitt und einen zweiten Aufnahmeabschnitt aufweist, wobei der erste Aufnahmeabschnitt eine Kabelaufnahme-Öffnung zur Aufnahme zumindest eines Abschnitts eines Kabels aufweist, die als des Haltergehäuses realisiert ist und sich entlang einer ersten Bezugsachse der Haltevorrichtung erstreckt, wobei der erste Aufnahmeabschnitt und der zweite Aufnahmeabschnitt in einer zweiten Bezugsachse der Haltevorrichtung, die die erste Bezugsachse schneidet, hintereinander gelegen sind,
eine Anschlussvorrichtung mit einem Adapterteil, das an dem zweiten Aufnahmeabschnitt fixiert oder befestigt ist, und mit einem Kopplungsstück aus magnetischem Material, das in dem Adapterteil formschlüssig fixiert ist oder in dieses eingepresst ist und das in einem Kopplungszustand die Haltevorrichtung an eine Anwendungskomponente koppelt,
wobei ein Oberflächenabschnitt des Kopplungsstücks in Richtung der zweiten Bezugsachse über das Haltergehäuse herausragt und zumindest teilweise eine Außenfläche der Haltevorrichtung ausbildet, und
wobei das Kopplungsstück zumindest abschnittsweise einen gekrümmten Oberflächenabschnitt aufweist, dessen Orientierung entlang der zweiten Bezugsachse verläuft und der von der Kabelaufnahme-Öffnung weg ragt, so dass der Oberflächenabschnitt des Kopplungsstücks im Kopplungszustand geeignet ist, einen Anwendungskomponenten-Oberflächenabschnitt der Anwendungskomponente lösbar zu kontaktieren und in dem Kopplungszustand das Haltergehäuse relativ zur Anwendungskomponente zumindest um die zweite Bezugsachse drehbar zu koppeln.

Unter "lösbar ankoppelbar" zwischen zwei Bauteilen oder Abschnitten von zwei Bauteilen, wie insbesondere zwischen dem Kopplungsstück aus magnetischem oder magnetisierbarem Material und der Anwendungskomponente in oder an dem Anwendungskomponenten-Oberflächenabschnitt, wird hierin insbesondere ein Ankoppeln der zwei Bauteile oder Abschnitte aufgrund einer magnetischen Anziehungskraft verstanden. Hierzu ist die Anwendungskomponente im Bereich des Anwendungskomponenten-Oberflächenabschnitts aus magnetischem oder magnetisierbarem Material gebildet oder hergestellt.

Bei jeder der erfindungsgemäßen Ausführungsformen der Haltevorrichtung mit ansonsten jeder hierin beschriebener Merkmalskombination der Haltevorrichtung kann die Haltevorrichtung derart realisiert sein, dass diese im Kopplungszustand zusätzlich entlang der Erstreckung des Anwendungskomponenten-Oberflächenabschnitts verschiebbar ist, so dass die Haltevorrichtung und gegebenenfalls die Haltevorrichtung zusammen mit einem von dem Haltergehäuse aufgenommenen zumindest einen Kabel entlang oder quer oder sowohl entlang als auch quer zu der ersten Bezugsrichtung bewegbar ist.

Bei jeder der erfindungsgemäßen Ausführungsformen der Haltevorrichtung mit ansonsten jeder hierin beschriebener Merkmalskombination der Haltevorrichtung kann die Haltevorrichtung derart realisiert sein, dass das Haltergehäuse im Kopplungszustand, gegebenenfalls mit einem von dem Haltergehäuse aufgenommenen Kabel, relativ zu dem Anwendungskomponenten-Oberflächenabschnitt kippbar ist.

Dabei kann die Haltevorrichtung im Kopplungszustand mit einer Drehbewegungs-Komponente relativ zum Anwendungskomponenten-Oberflächenabschnitt drehbar sein, die eine Drehachse aufweist, die senkrecht zur zweiten Bezugsachse verläuft.

Bei jeder der erfindungsgemäßen Ausführungsformen der Haltevorrichtung mit ansonsten jeder hierin beschriebener Merkmalskombination der Haltevorrichtung kann die Haltevorrichtung derart realisiert sein, dass das Kopplungsstück zumindest abschnittsweise einen konvex gekrümmten und insbesondere einen sphärischen Oberflächenabschnitt aufweist, dessen Orientierung entlang der zweiten Bezugsachse verläuft und der von der Kabelaufnahme-Öffnung oder der Durchgangsöffnung weg ragt. Somit ist die konvexe oder sphärische Krümmung in einer Blickrichtung von der Anwendungskomponente aus gesehen geformt. Die konvexe Krümmung kann insbesondere in einem Bereich ausgebildet sein, der vom Haltergehäuse aus gesehen der entfernteste Bereich ist oder den entferntesten Punkt des Oberflächenabschnitts enthält. Dieser Bereich kann auch ein Umgebungsbereich des entferntesten Punkts des Oberflächenabschnitts sein. Somit verlaufen in diesem Fall die Richtungen der Flächen-Normalen des gekrümmten Oberflächenabschnitts entlang der zweiten Bezugsachse und sind von der Durchgangsöffnung weggerichtet. Dabei ragt das Kopplungsstück von dem Haltergehäuse nach außen weg.

Bei jeder der erfindungsgemäßen Ausführungsformen der Haltevorrichtung mit ansonsten jeder hierin beschriebener Merkmalskombination kann die Haltevorrichtung derart realisiert sein, dass das Kopplungsstück zumindest abschnittsweise als zylindrischer Körper ausgebildet ist, wobei eine ebene Grundfläche des zylindrischen Körpers eine Orientierung aufweist, die in oder entlang der Richtung der zweiten Bezugsachse gerichtet und von der Durchgangsöffnung weg gerichtet ist.

Bei jeder der erfindungsgemäßen Ausführungsformen der Haltevorrichtung mit ansonsten jeder hierin beschriebener Merkmalskombination kann die Haltevorrichtung derart realisiert sein, dass nach außen weg ragender Abschnitt des Kopplungsstücks zumindest abschnittsweise die Form einer zylindrischen Außenfläche aufweist, wobei die Orientierungen der zylindrischen Außenfläche entlang der Richtung der zweiten Bezugsachse gerichtet und von der Durchgangsöffnung weg gerichtet ist.

Bei jeder der erfindungsgemäßen Ausführungsformen der Haltevorrichtung mit ansonsten jeder hierin beschriebener Merkmalskombination der Haltevorrichtung kann die Haltevorrichtung derart realisiert sein, dass die Anschlussvorrichtung ein Adapterteil aufweist, das in eine Öffnung des Haltergehäuses, die in der Richtung der zweiten Bezugsachse von der Durchgangsöffnung weg gerichtet ist oder deren Randlinie, die die Öffnung definiert, die zweite Bezugsachse umläuft, eingesetzt ist, und durch welches das Kopplungsstück in dem Haltergehäuse gehalten ist. Dabei kann insbesondere vorgesehen sein, dass das Kopplungsstück in dem Haltergehäuse fixiert oder befestigt ist.

Dabei kann insbesondere vorgesehen sein, dass das Adapterteil derart geformt ist, dass dieses eine formschlüssige Verbindung mit dem Kopplungsstück realisiert. Alternativ oder zusätzlich kann vorgesehen sein, dass das Adapterteil vollständig in dem Haltergehäuse gelegen ist oder dass ein Abschnitt des Adapterteils von dem Haltergehäuse vorsteht.

Bei Ausführungsformen der Haltevorrichtung mit einem Adapterteil kann dieses in eine Öffnung des Haltergehäuses eingeschraubt sein.

Bei jeder der erfindungsgemäßen Ausführungsformen der Haltevorrichtung mit ansonsten jeder hierin beschriebener Merkmalskombination der Haltevorrichtung kann die Haltevorrichtung derart realisiert sein, dass die Kabelaufnahme-Öffnung insbesondere als Durchgangsöffnung realisiert ist, die derart ausgebildet ist, dass sich ein in dieses eingesetztes Kabel relativ zum Haltergehäuse in der ersten Bezugsachse bewegen kann oder eine Drehung um die erste Bezugsachse ausführen kann. Dies ist insbesondere dann möglich, wenn ausreichend Spiel zwischen der Innenseite der Durchgangsöffnung und dem Abschnitt des zumindest einen Kabels, der in der Durchgangsöffnung gelegen ist, vorhanden ist.

Bei jeder der erfindungsgemäßen Ausführungsformen der Haltevorrichtung mit ansonsten jeder hierin beschriebener Merkmalskombination der Haltevorrichtung kann die Haltevorrichtung derart realisiert sein, dass in der Kabelaufnahme-Öffnung oder der Durchgangsöffnung des Haltergehäuses ein Kabel-Aufnahmeteil zur Aufnahme eines jeweiligen Abschnitts des zumindest einen Kabels angeordnet ist. Dabei kann vorgesehen sein, dass das Kabel-Aufnahmeteil als hohlzylindrisches Aufnahmeelement realisiert ist, das sich entlang der ersten Bezugsachse der Haltevorrichtung erstreckt.

Nach einem weiteren Aspekt der Erfindung ist eine Kombination aus einer erfindungsgemäßen Haltevorrichtung und einer Anwendungskomponente vorgesehen, wobei in einem Kopplungszustand das Kopplungsstück und die Anwendungskomponente in einem Anwendungskomponenten-Oberflächenabschnitt, an dem die Haltevorrichtung anliegt, durch eine magnetische Kraft angekoppelt sind bzw. aneinander angezogen werden. Dabei kann insbesondere der Anwendungskomponenten-Oberflächenabschnitt als konkave Vertiefung ausgebildet sein, in der das Kopplungsstück teilweise gelegen ist.

Bei den erfindungsgemäßen Ausführungsformen der Kombination aus einer erfindungsgemäßen Haltevorrichtung und einer Anwendungskomponente kann vorgesehen sein, dass der Anwendungskomponenten-Oberflächenabschnitt der Anwendungskomponente eine konvex gekrümmte Außenfläche aufweist. Insbesondere kann die Anwendungskomponente einen stiftförmigen Abschnitt mit einer konvex gekrümmten Außenfläche aufweisen, die der Anwendungskomponenten-Oberflächenabschnitt ist, an dem das Kopplungsstück anliegt.

Die vorgenannte Kombination aus einer erfindungsgemäßen Haltevorrichtung und eine Anwendungskomponente kann generell derart realisiert sein, dass die Anwendungskomponente als Crimpflansch ausgebildet ist.

Nach einem weiteren Aspekt der Erfindung ist eine elektrische Anschlussvorrichtung zum elektrischen Anschließen eines Kabels an eine Kontaktierungsvorrichtung mit einer Ausführungsform der erfindungsgemäßen Haltevorrichtung und einer Anwendungskomponente, die als elektrische Kontaktierungsvorrichtung aus einem elektrisch leitfähigen Material ausgebildet ist, vorgesehen,
wobei das Kopplungsstück aus elektrisch leitfähigem Material gebildet ist,
wobei in einem Kopplungszustand das Kopplungsstück an einem Anwendungskomponenten-Oberflächenabschnitt der Anwendungskomponente anliegt und das Kopplungsstück der Haltevorrichtung und die Anwendungskomponente durch eine magnetische Anziehungskraft angezogen werden und gekoppelt sind,
wobei das Kopplungsstück an einem Anwendungskomponenten-Oberflächenabschnitt der elektrischen Kontaktierungsvorrichtung anliegt und Haltevorrichtung und die Anwendungskomponente durch eine magnetische Anziehungskraft angezogen werden und gekoppelt sind.

Nach einem weiteren Aspekt der Erfindung ist ein Stellantriebssystem mit einem Stellantrieb und einer Haltevorrichtung nach einer hierin beschriebenen Ausführungsform vorgesehen, wobei der Stellantrieb ein stiftförmiges Kontaktierungsteil mit einem konvex gekrümmten Außenflächenabschnitt aufweist, das Anwendungskomponenten-Oberflächenabschnitt ist, an dem in dem Kopplungszustand das Kopplungsstück anliegt.

Der Ausdruck "entlang" bedeutet hierin im Zusammenhang mit einer hierin genannten Richtungsangabe, die insbesondere auch den Verlauf einer Konturlinie oder einer Oberfläche oder eine Richtung eines Bauteils oder einer Strukturkomponente wie eine Achse oder eine Welle oder eine Mittelachse derselben betreffen kann, in Bezug auf eine Bezugsrichtung oder eine Bezugsachse, dass ein Abschnitt des Verlaufs oder die Tangente an eine jeweilige Konturlinie oder jeweilige Oberfläche oder die Richtung in einer explizit oder implizit vorgegebenen Blickrichtung lokal oder abschnittsweise mit einem Winkel von maximal 45 Grad und insbesondere von maximal 30 Grad von der jeweiligen Bezugsrichtung bzw. Bezugsachse abweicht, auf die die jeweilige Richtungsangabe bezogen ist.

Der Ausdruck "quer" bedeutet hierin im Zusammenhang mit einer hierin genannten Richtungsangabe, die insbesondere auch den Verlauf einer Konturlinie oder einer Oberfläche oder eine Richtung eines Bauteils oder einer Strukturkomponente wie eine Achse oder eine Welle oder eine Mittelachse derselben betreffen kann, in Bezug auf eine Bezugsrichtung oder eine Bezugsachse, dass ein Abschnitt des Verlaufs oder die Tangente an eine jeweilige Konturlinie oder jeweilige Oberfläche oder die Richtung in einer explizit oder implizit vorgegebenen Blickrichtung lokal oder abschnittsweise mit einem Winkel, der zwischen 45 Grad und 135 Grad beträgt, und vorzugsweise mit einem Winkel, der zwischen 67 Grad und 113 Grad beträgt, von der jeweiligen Bezugsrichtung bzw. Bezugsachse abweicht, auf die die jeweilige Richtungsangabe bezogen ist.

Unter dem Begriff "Abstand" insbesondere zwischen zwei Flächen wird hierin insbesondere der kürzeste Abstand verstanden.

Spezieller kann hierin unter einem "Abstand" insbesondere zwischen zwei Gegenständen oder zwei Flächen oder Bezugspunkten insbesondere die kürzeste Entfernung oder der kürzeste Abstand zwischen den zwei Gegenständen oder Flächen oder Bezugspunkten verstanden werden, wobei die kürzeste Entfernung oder der kürzeste Abstand dem Betrag nach ungleich Null ist, sofern hierin in dieser Hinsicht explizit keine andere Angabe gemacht wird.

Eine "Mittellinie" oder eine "Längsrichtung" oder "Bezugsachse" oder eine andere Referenzlinie, wie insbesondere eine zentrale Achse oder eine mittig verlaufende Linie zumindest einer Strukturkomponente oder eines Bauteils, die oder das jeweils insbesondere ein Mäander-Abschnitt sein kann, kann hierin derart definiert sein, dass diese sich insbesondere als Verbindungslinie der Flächenschwerpunkte der jeweils kleinsten Querschnittsflächen der jeweiligen Strukturkomponente an jedem Punkt entlang einer ermittelten oder vorgegebenen Referenzlinie oder eines Verlaufs zwischen zwei ermittelten oder vorgegebenen Enden der Strukturkomponente oder des Bauteils ergibt. Eine "Mittellinie" einer Referenzlinie kann hierin jedoch auch nach einer anderen Definition, die aus dem Stand der Technik bekannt ist, verlaufen. In dem Fall, dass die Referenzlinie gekrümmt oder zumindest abschnittsweise gekrümmt verlaufen kann, kann eine Referenzrichtung in einem Punkt der Referenzlinie generell als lokale Längsrichtung verstanden werden und insbesondere die Richtung der Tangente an diesen Punkt haben.

Unter der Bezeichnung "im Wesentlichen" in Bezug auf ein Merkmal oder einen Wert wird hierin insbesondere verstanden, dass das Merkmal eine Abweichung von 20 % und speziell von 10 % von dem Merkmal oder dessen geometrischen Eigenschaft bzw. des Werts enthält.

Unter "Orientierung" in Bezug auf eine Fläche und insbesondere Oberfläche wird hierin die Normale auf die jeweilige Oberfläche verstanden. Für den Fall, dass es sich bei der betreffenden Oberfläche nicht um eine gerade, sondern beispielsweise eine gekrümmte Oberfläche handelt, kann zur Ermittlung der Oberflächen-Normalen die Normale auf eine gerade Oberfläche derselben Größe verwendet werden, für deren Lage sich relativ zu gekrümmten Oberfläche in der Summe die geringste Abweichung ergibt.

Unter einer "Erstreckung" eines Flächenabschnitts wird eine Richtung eines ebenen Flächenabschnitts verstanden, der entlang des in Bezug genommenen Flächenabschnitts verläuft und in Bezug zu diesem eine derartige Lage hat, bei der die Summe der Abweichungsbeträge zwischen beiden Flächenabschnitten minimal ist. In Bezug auf einen Längenbetrag der Erstreckung eines Flächenabschnitts wird hierin eine Länge eines fiktiven Flächenabschnitts derselben Größe in einer zu definierenden Richtung verstanden, der eine Lage hat relativ zu dem referenzierten Flächenabschnitt hat, bei der die Summe der Abweichungsbeträge zwischen beiden Flächenabschnitten minimal ist.

Unter "planar" in Bezug auf einen Oberflächenabschnitt wird hierin verstanden, dass der Oberflächenabschnitt sowohl geradflächige als auch gekrümmt geformt sein kann.

Unter einem Regelflächen-Abschnitt wird hierin ein Flächen-Abschnitt und insbesondere Außenflächen-Abschnitt verstanden, der als Regelfläche, also durch Bewegung einer Geraden im Raum erzeugbare Fläche, ausgebildet ist, und wird hierin eine Fläche und insbesondere Außenfläche verstanden,

Unter einem "zylindrischen Bauteil" oder einem "zylindrischen Abschnitt" eines Bauteils wird hierin ein Bauteil oder Abschnitt desselben verstanden, das oder der jeweils wenigstens abschnittsweise die Form eines Abschnitts der Mantelfläche eines allgemeinen Zylinders aufweist.

Unter einer "zylindrischen Außenfläche" wird hierin eine Außenfläche verstanden, die als eine Regelfläche, und kann unverzerrt in die Ebene abgewickelt werden
Konvex gekrümmte Außenflächen-Abschnitt ist ein Abschnitt einer konvexen Außenfläche, die einen kontinuierlichen und in jeder Richtung differenzierbaren Verlauf hat. Eine konvex gekrümmte Außenflächen-Abschnitt kann insbesondere konvex und sphärisch gekrümmt sein. Der Ausdruck "konvex" bedeutet hierin konvex in der Blickrichtung von außerhalb der Haltevorrichtung auf die jeweilige Außenfläche, also insbesondere im Kopplungszustand von dem Anwendungskomponenten-Oberflächenabschnitt aus gesehen.

Unter "magnetischem Material" ist hierin insbesondere ein Material zu verstehen, dass entweder intrinsisch magnetische Eigenschaften aufweist (wie bei einem Dauer- oder Permanentmagneten) oder aber mit Hilfe eines Magneten magnetisierbar ist (etwa ein ferromagnetisches Material wie Eisen oder Stahl).

Aufgabe der Erfindung ist, einen Kabelhalter bereitstellen, der eine Alternative zu bekannten Kabelhaltern ist.

Im Folgenden werden Ausführungsformen der Erfindung anhand der beiliegenden Figuren beschrieben. Hierin ist die Beschreibung von Merkmalen oder Komponenten von erfindungsgemäßen Ausführungsformen so zu verstehen, dass eine betreffende Ausführungsform erfindungsgemäß, sofern dies nicht explizit ausgeschlossen ist, auch zumindest ein Merkmal einer anderen Ausführungsform aufweisen kann, jeweils als zusätzliches Merkmal dieser betreffenden Ausführungsform oder als alternatives Merkmal, das ein anderes Merkmal dieser betreffenden Ausführungsform ersetzt. Die Figuren zeigen:

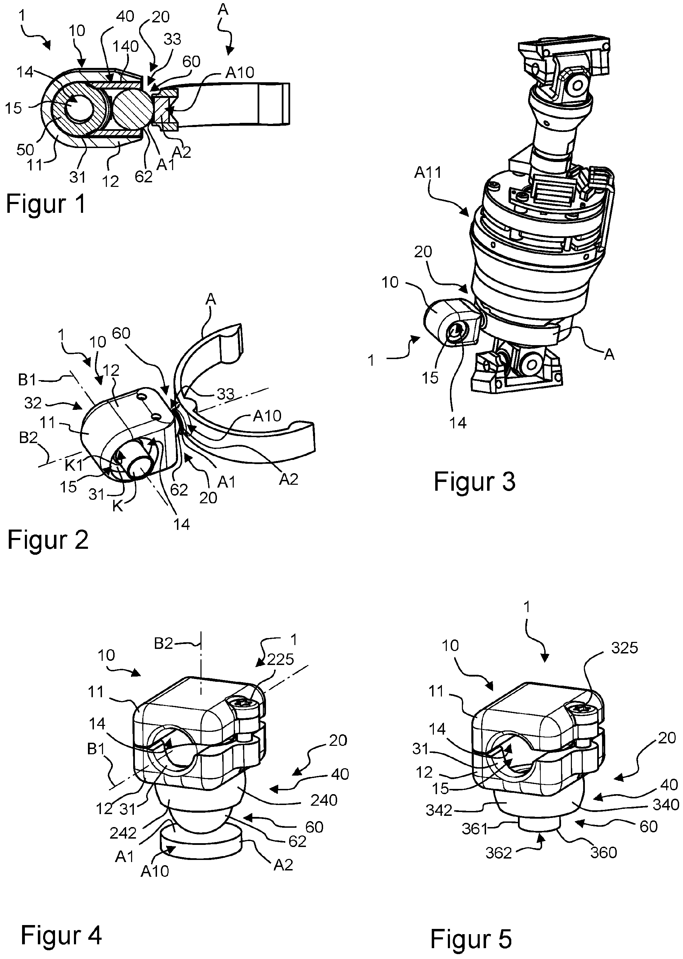

Figur 1 eine Seitendarstellung einer Ausführungsform des erfindungsgemäßen Kabelhalters,
Figur 2 eine perspektivische Darstellung der Ausführungsform des Kabelhalters, die in der Figur 1 dargestellt ist,
Figur 3 eine perspektivische Darstellung eines Stellantriebs, an dem die Ausführungsform des Kabelhalters nach der Figur 1 angebracht ist,
Figur 4 eine perspektivische Darstellung einer weiteren Ausführungsform des erfindungsgemäßen Kabelhalters,
Figur 5 eine perspektivische Darstellung einer weiteren Ausführungsform des erfindungsgemäßen Kabelhalters,

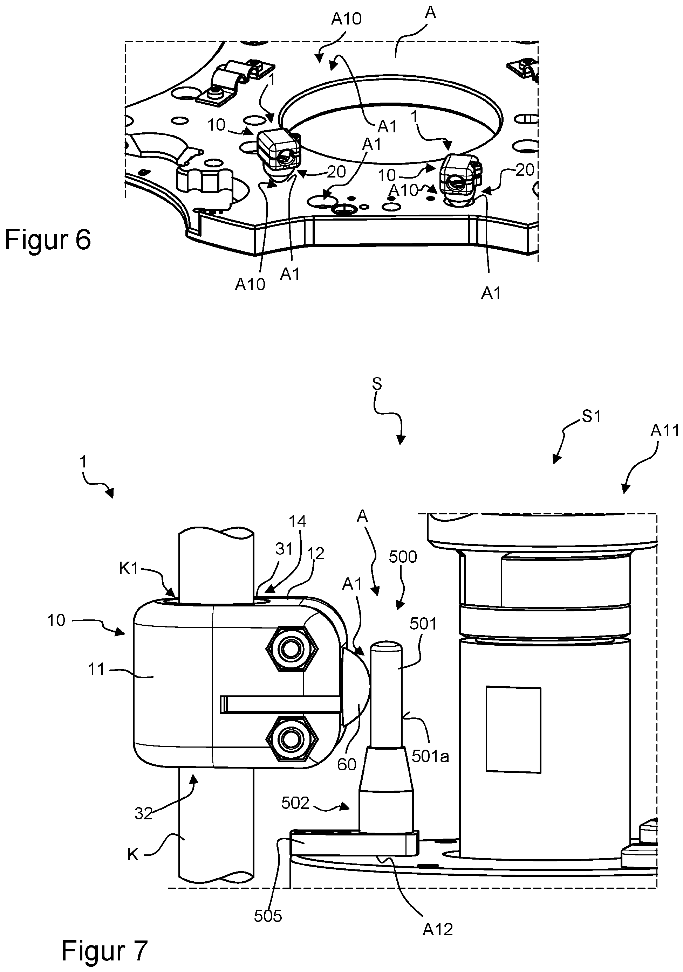

Figur 6 eine perspektivische Darstellung eines Abschnitts einer weiteren Ausführungsform einer Anwendungskomponente mit zwei Exemplaren der Ausführungsform des Kabelhalters nach der Figur 4, die jeweils an der Oberfläche des Abschnitts angeordnet sind,
Figur 7 eine perspektivische Darstellung einer weiteren Ausführungsform der Anwendungskomponente in Form einer Kontaktierungsvorrichtung, die als stiftförmiges Kontaktierungsteil ausgeführt ist, und der Ausführungsform des Kabelhalters nach der Figur 4, die jeweils an der Oberfläche des stiftförmigen Anschlussteils angeordnet ist, wobei das stiftförmige Anschlussteil an einer weiteren Anwendungskomponente angebracht ist, und

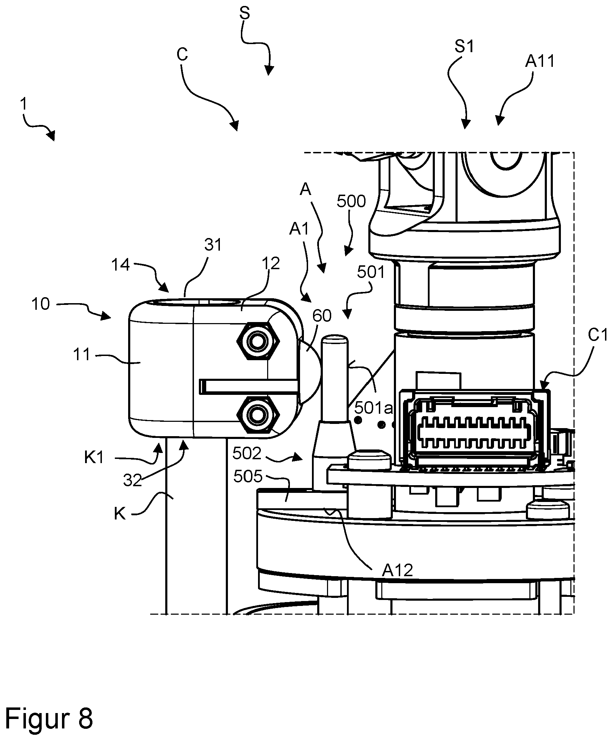

Figur 8 eine perspektivische Darstellung einer elektrischen Anschlussvorrichtung nach der Erfindung, wobei die elektrische Anschlussvorrichtung eine Ausführungsform des Kabelhalters nach der Figur 4 und die Ausführungsform der Anwendungskomponente eine elektrische Kontaktierungsvorrichtung in Form eines stiftförmigen Anschlussteils nach der Figur 7 ist.

Die erfindungsgemäße Haltevorrichtung 1 ist zum Halten oder Fixieren zumindest eines Kabels K und insbesondere eines Abschnitts des zumindest einen Kabels K und hierzu zur Anordnung oder Anbringung an einem Abschnitt oder Bereich einer Anwendungskomponente A vorgesehen. Die Anwendungskomponente A kann jede Anwendungskomponente mit einer elektrischen Stromversorgung oder einer elektrischen Ansteuerung oder sowohl einer elektrischen Stromversorgung als auch einer elektrischen Ansteuerung sein. Demgemäß kann das zumindest eine Kabel K jeweils ein Stromkabel oder ein Kabel zur Ansteuerung einer Anwendungskomponente A oder ein Signalkabel sein. Die Anwendungskomponente A kann auch ein Stellantrieb oder ein Motor oder eine Computerkomponente oder ein Gehäuse eines Stellantriebs oder ein Gehäuse eines Motors oder ein Gehäuse einer Computerkomponente sein. Die Anwendungskomponente A kann auch eine Zwischenhalterung oder ein Zwischenstück sein, das zur Anbringung an Einrichtungsgegenständen oder einer Wand, also an einem räumlich feststehenden oder befestigten oder fixierten Gegenstand, vorgesehen ist. Auch kann die Anwendungskomponente A ein separat räumlich aufstellbares Bauteil sein.

Die in der Figur 1 gezeigte Haltevorrichtung 1 weist auf: ein Haltergehäuse 10 mit einer Kabelaufnahme-Öffnung 14, die wie in den Figuren dargestellt insbesondere als Durchgangsöffnung 15 oder als Vertiefung realisiert sein kann, und eine Anschlussvorrichtung 20 zur Ankopplung der Haltevorrichtung an die Anwendungskomponente A in Form eines Crimpflansches. Zur Beschreibung der Haltevorrichtung 1 und von Komponenten desselben wird hierin eine erste Bezugsachse B1 und eine zweite Bezugsachse B2, die senkrecht zur erste Bezugsachse B1 verläuft, definiert. Im Folgenden wird die Kabelaufnahme-Öffnung 14 als Durchgangsöffnung 15 beschrieben. Die erste Bezugsachse B1 verläuft zentral durch die Kabelaufnahme-Öffnung 14 bzw. Durchgangsöffnung 15, so dass sich die Durchgangsöffnung 15 entlang der ersten Bezugsachse B1 der Haltevorrichtung 1 erstreckt.

Die als Vertiefung realisierte Kabelaufnahme-Öffnung 14 ist zur Aufnahme zumindest eines Endabschnitts eines Kabels K ausgebildet. Die Durchgangsöffnung 15 ist zur Aufnahme zumindest eines Kabels K ausgebildet. Das zumindest eine Kabel K kann als ein einzelnes Kabel oder als eine Mehrzahl von Kabeln oder als ein Kabelbündel ausgebildet sein. In dem Fall, dass zumindest ein Kabel K von der Durchgangsöffnung 15 aufgenommen ist, erstreckt sich dieses durch die Durchgangsöffnung 15, so dass ein Kabel-Aufnahmeabschnitt K1 innerhalb der Durchgangsöffnung 15 gelegen ist. Der Querschnitt der Durchgangsöffnung 15 ist in Blickrichtung der ersten Bezugsachse B1 von seiner Größe und Form her derart gestaltet, dass der Kabel-Aufnahmeabschnitt K1 in die Durchgangsöffnung 15 aufnehmbar ist. Insbesondere kann die Größe und Form der Durchgangsöffnung 15 derart ausgebildet sein, dass ausreichend Spiel zwischen der Innenseite der Durchgangsöffnung 15 und der Außenfläche des zumindest einen Kabels K ist. Dabei kann die Größe und Form der Durchgangsöffnung 15 derart ausgebildet sein, dass sich das zumindest eine Kabel K relativ zum Haltergehäuse 10 in der ersten Bezugsachse B1 bewegen kann und eine Drehung um die erste Bezugsachse B1 ausführen kann. Hierbei kann die Größe des kleinsten Durchmessers der Durchgangsöffnung 15 in Blickrichtung der ersten Bezugsachse B1 maßgebend sein.

Die Anschlussvorrichtung 20 weist ein Kopplungsstück 60 auf, das aus einem magnetischen Material gebildet ist. Das Kopplungsstück 60 ist in dem Haltergehäuse 10 gehalten und vorzugsweise darin bzw. daran befestigt und fixiert. Das Kopplungsstück 60 ist zum Ankoppeln an einen Anwendungskomponenten-Oberflächenabschnitt A1 der Anwendungskomponente A vorgesehen. Hierzu kann, wie dies auch bei der Ausführungsform der Figur 1 realisiert ist, das Kopplungsstück 60 nur teilweise in dem Haltergehäuse 10 gelegen sein und ein zweiter Abschnitt des Kopplungsstücks 60 aus dem Haltergehäuse 10 herausragen, so dass zumindest ein Abschnitt eines Oberflächenabschnitts 62 des Kopplungsstücks 60 eine vorstehende Außenfläche der Haltevorrichtung 1 ausbildet, so dass das Kopplungsstück 60 teilweise von dem Haltergehäuse 10 vorsteht. Alternativ dazu kann die Haltevorrichtung 1 derart realisiert sein, dass das Kopplungsstück 60 vollständig in dem Haltergehäuse 10 gelegen ist, d.h. keine vorstehende Außenfläche der Haltevorrichtung 1 ausbildet. Der Oberflächenabschnitt 62 ist sphärisch gekrümmt. Generell kann bei diesen Ausführungsformen der vorstehende Oberflächenabschnitts 62 zumindest in einem Abschnitt konvex gekrümmt sein. Die Form des Kopplungsstücks 60 kann ansonsten beliebig sein und ist insbesondere an das Haltergehäuse 10 oder das jeweilige Adapterteil 40 in vorteilhafter Weise angepasst sein.

Dabei ist die konvexe oder insbesondere sphärische Krümmung in einer Blickrichtung von der Anwendungskomponente aus gesehen geformt. Die konvexe Krümmung des Oberflächenabschnitts 62 ist insbesondere in einem Bereich ausgebildet, der vom Haltergehäuse 10 aus gesehen der entfernteste Bereich ist oder den entferntesten Punkt des Oberflächenabschnitts enthält. Dieser Bereich kann auch ein Umgebungsbereich des entferntesten Punkts des Oberflächenabschnitts sein.

Die zweite Bezugsachse B2 kann insbesondere derart definiert sein, dass diese die erste Bezugsachse B1 schneidet und zusätzlich durch das Zentrum oder den zentralen Punkt des Kopplungsstücks 60 verläuft. Die zweite Bezugsachse B2 kann auch auf andere Weise definiert sein. Beispielsweise kann die zweite Bezugsachse B2 derart definiert sein, dass diese die erste Bezugsachse B1 schneidet und zusätzlich in einer vorgegebenen Ausgangsorientierung oder Soll-Orientierung der Haltevorrichtung 1 im Kopplungszustand eine Vertikale zu dem Anwendungskomponenten-Oberflächenabschnitt A1 bildet, der insbesondere geradflächig geformt sein kann oder so ausgewählt sein kann, dass dieser geradflächig ist.

Die Ankopplung des Haltergehäuses 10 oder des Kopplungsstücks 60 an den Oberflächenabschnitt A1 der Anwendungskomponente A erfolgt dadurch, dass die Anwendungskomponente A im Bereich des Anwendungskomponenten-Oberflächenabschnitts A1 von dem magnetischen Kopplungsstück 60 anziehbar und insbesondere ferromagnetisch bzw. metallisch ist, so dass bei einem geeigneten Abstand zwischen dem Anwendungskomponenten-Oberflächenabschnitt A1 und dem Oberflächenabschnitt 62 des Kopplungsstücks 60, das dem Anwendungskomponenten-Oberflächenabschnitt A1 zugewandt gelegen ist, eine Magnetkraft zwischen dem Kopplungsstück 60 und dem Anwendungskomponenten-Oberflächenabschnitt A1 wirkt, bei der zwischen dem Kopplungsstück 60 und der Anwendungskomponente A gegenseitig eine Anziehungskraft wirkt. Die Wahl des Materials des Kopplungsstücks 60 und der Form des Kopplungsstücks 60 und die Position des Kopplungsstücks 60 im Haltergehäuse 10, die den Abstand des Kopplungsstücks 60 von dem Anwendungskomponenten-Oberflächenabschnitt A1 im Kopplungszustand bestimmt, ist derart vorgesehen, dass bei bestimmten Materialien der Anwendungskomponente A an dem Anwendungskomponenten-Oberflächenabschnitt A1 eine im Kopplungszustand auftretende Magnetkraft wirkt, die einen vorgegebenen Mindestbetrag übersteigt, und optional einen vorgegebenen Maximalbetrag unterschreitet, so dass zum einen eine ausreichende Haltekraft bei normaler Verwendung gegeben ist, und zum anderen die Haltekraft begrenzt ist, so dass bei übermäßiger auf das Kabel K wirkender Kraft eine gewünschte Ablösung des Kopplungsstücks 60 von der Anwendungskomponente A bzw. deren Oberflächenabschnitt A1 gegeben ist.

Im Kopplungszustand liegt der Oberflächenabschnitt 62 des Kopplungsstücks 60 bevorzugt an dem Anwendungskomponenten-Oberflächenabschnitt A1 an und kontaktiert diesen. Dabei erstreckt sich ein Abschnitt des Kopplungsstücks 60 in Richtung der zweiten Bezugsachse B2 über das Haltergehäuse 10 hinaus und von der Durchgangsöffnung 15 weg. Dagegen ist in dem Fall, dass das Kopplungsstück 60 vollständig innerhalb des Haltergehäuses 10 gelegen ist, im Kopplungszustand ein vorbestimmter Abstand zwischen dem Oberflächenabschnitt 62 des Kopplungsstücks 60, also jedem Punkt desselben, und dem Anwendungskomponenten-Oberflächenabschnitt A1 gegeben.

Durch die beschriebene Art der Kopplung ist im Kopplungszustand das Haltergehäuse 10 relativ zum Anwendungskomponenten-Oberflächenabschnitt A1 um die zweite Bezugsachse B2 drehbar, wenn am Haltergehäuse 10 oder dem zumindest einen Kabel K ein entsprechendes Drehmoment ausgeübt wird, das eine Drehung um die zweite Bezugsachse B2 bewirkt oder eine Komponente hat, die eine Drehung um die zweite Bezugsachse B2 bewirkt, wobei jeweils gleichzeitig der Kopplungszustand durch die magnetische Anziehungskraft stabil erhalten bleibt.

Bei einer entsprechenden Wahl des Materials des Kopplungsstücks 60, der Form des Kopplungsstücks 60 und der Position des Kopplungsstücks 60 im Haltergehäuse 10 kann eine im Kopplungszustand auftretende Magnetkraft eingestellt werden, bei der das in dem Haltergehäuse 10 aufgenommene zumindest eine Kabel K mit der Haltevorrichtung 1 entlang oder quer oder sowohl entlang als auch quer zu der ersten Bezugsachse B1 bewegbar ist.

Die Ausführungsform der Haltevorrichtung 1 nach der Figur 1 weist ein Kopplungsstück 60 auf, das als Kugel realisiert ist. Nach der Erfindung kann das Kopplungsstück 60 bei jeder hierin definierten Ausführungsform der Haltevorrichtung 1 auch andere Formen haben. Das Kopplungsstück 60 kann auch als Ellipsoid oder abschnittsweise als Ellipsoid realisiert sein. Insbesondere kann die Form des Kopplungsstücks 60 z.B. nach Anwendungs- oder Herstellungsaspekten in verschiedener Weise ausgewählt sein, wobei das Kopplungsstück 60 zumindest abschnittsweise einen sphärischen Oberflächenabschnitt aufweist, dessen Orientierung entlang der zweiten Bezugsachse B2 verläuft und von der Durchgangsöffnung 15 weg ragt, d.h. im Kopplungszustand dem Anwendungskomponenten-Oberflächenabschnitt A1 zugewandt gelegen oder in Richtung zu diesem hin orientiert ist.

Auch andere Formen sind für das Kopplungsstück 60 bei den hierin beschriebenen Ausführungsformen der Haltevorrichtung 1 denkbar, die für den Einzelfall und die Herstellung einer geforderten Bewegbarkeit der Haltevorrichtung 1 im Kopplungszustand vorteilhaft sind, wie z.B. eine wenigstens abschnittsweise pyramidenförmige oder eine wenigstens abschnittsweise quaderförmige oder eine wenigstens abschnittsweise rhombische Form, jeweils in regelmäßiger oder unregelmäßiger Weise.

Dabei kann der sphärische Oberflächenabschnitt derart ausgeführt sein, dass die Haltevorrichtung im Kopplungszustand Drehungen relativ zum Anwendungskomponenten-Oberflächenabschnitt A1 ausführen kann, die zueinander unterschiedliche Drehbewegungs-Komponenten aufweist, die jeweils senkrecht zur zweiten Bezugsachse B2 und zueinander quer oder zueinander senkrecht verlaufen.

Erfindungsgemäße Ausführungsformen der Haltevorrichtung 1 können ein Kopplungsstück 60 aufweisen, das zumindest abschnittsweise als zylindrischer Körper 360 ausgebildet ist, wobei eine ebene Grundfläche 362 des zylindrischen Körpers 360 eine Orientierung aufweist, die in oder entlang der Richtung der zweiten Bezugsachse B2 gerichtet und von der Durchgangsöffnung 15 weg gerichtet, d.h. im Kopplungszustand dem Anwendungskomponenten-Oberflächenabschnitt A1 zugewandt gelegen ist. Dabei kann insbesondere vorgesehen sein, dass sich ein Abschnitt 361 des zylindrischen Körpers 360 in Richtung der zweiten Bezugsachse B2 über das Haltergehäuse 10 hinaus erstreckt. Eine solche Ausführungsform der Haltevorrichtung 1 ist in der Figur 6 dargestellt. Eine andere Ausführungsform der Haltevorrichtung 1 weist ein Kopplungsstück 60 auf, das zumindest abschnittsweise als zylindrischer Körper 360 realisiert und vollständig in dem Haltergehäuse 10 gelegen ist.

Eine andere Ausführungsform der Haltevorrichtung 1 weist ein Kopplungsstück 60 auf, das zumindest abschnittsweise als zylindrischer Körper oder teilzylindrischer Körper realisiert ist, wobei ein Abschnitt des Kopplungsstücks 60 in Richtung der zweiten Bezugsachse B2 über das Haltergehäuse 10 hinausragt und wobei die in Richtung der zweiten Bezugsachse B2 von dem Haltergehäuse 10 weg und nach außen gerichtete Fläche zumindest ein Abschnitt der Mantelfläche des Kopplungsstücks 60 ist. Dabei ist die Haltevorrichtung im Kopplungszustand mit einer Drehbewegungs-Komponente relativ zum Anwendungskomponenten-Oberflächenabschnitt A1 drehbar, die eine Drehachse aufweist, die senkrecht zur zweiten Bezugsachse B2 und insbesondere in oder entlang einer Bezugsachse des Kopplungsstücks 60, die ein Abschnitt der Mantelfläche des Kopplungsstücks 60 teilweise umläuft, verläuft.

Nach der Erfindung kann das Kopplungsstück 60 direkt von dem Haltergehäuse 10 aufgenommen sein, also an einer Innenfläche oder an mehreren Innenflächen des Haltergehäuses 10 anliegen.

Das Haltergehäuse 10 kann in verschiedener Weise ausgeführt sein und weist generell einen ersten Aufnahmeabschnitt 11, in dem die Durchgangsöffnung 15 ausgebildet ist, und einen zweiten Aufnahmeabschnitt 12, in dem das Kopplungsstück 60 aufgenommen ist, auf. Der erste Aufnahmeabschnitt 11 und der zweite Aufnahmeabschnitt 11 sind in der zweiten Bezugsachse B2 hintereinander angeordnet. Das Haltergehäuse 10 kann insbesondere als im Wesentlichen geschlossenes Gehäuse ausgebildet sein, das seitliche Öffnungen 31, 32 aufweist, die durch die äußeren Ränder der Durchgangsöffnung 15 ausgebildet sind, wobei die seitlichen Öffnungen 31, 32 in der Richtung der erste Bezugsachse B1 voneinander beabstandet sind. Zusätzlich kann das Haltergehäuse 10, wie die Ausführungsform der Figuren 1 und 2 zeigt, eine sich in Richtung der zweiten Bezugsachse B2 öffnende Öffnung 33 aufweisen, die im zweiten Aufnahmeabschnitt 12 ausgebildet ist. Das Haltergehäuse 10 ist als Hohlkörper ausgeführt, wie dies in den Figuren 1, 4 oder 5 gezeigt ist. Alternativ dazu kann der erste Aufnahmeabschnitt 11 und der zweite Aufnahmeabschnitt 12 jeweils bügelförmig oder klammerförmig realisiert sein.

Nach einer Ausführungsform der Erfindung kann das Haltergehäuse 10, abgesehen von der Öffnung 33 und der Durchgangsöffnung 15 als geschlossenes Gehäuse ausgeführt sein. Der Begriff "geschlossenes Gehäuse" beinhaltet, dass das Gehäuse oder deren Seitenwände aus einem kontinuierlich durchgehenden Material ausgeführt ist oder von der Umfangskontur her von sich flächig erstreckenden Wänden gebildet ist, die also nicht aus einem kontinuierlich durchgehenden Material, sondern z.B. aus einem Gitter oder ähnlich gebildet sein können.

Der erste Aufnahmeabschnitt 11 und der zweite Aufnahmeabschnitt 11 können aus einem Stück oder als ein Stück hergestellt sein, wie dies bei der Ausführungsform der Haltevorrichtung 1 der Figuren 1 und 2 dargestellt ist. Auch können der erste Aufnahmeabschnitt 11 und der zweite Aufnahmeabschnitt 11 als zwei voneinander separate Teile hergestellt sein, wie dies die Ausführungsform der Haltevorrichtung 1 der Figur 4 und die Ausführungsform der Haltevorrichtung 1 der Figur 5 zeigt. Dabei können die zwei Teile formschlüssig oder mittels eines Verbindungselements 225 bzw. 325 oder alternativ dazu mittels mehrerer Verbindungselemente aneinander befestigt sein.

In der Durchgangsöffnung 15, die in dem ersten Aufnahmeabschnitt 11 gelegen ist, kann ein Kabel-Aufnahmeteil 50 angeordnet sein, das ein Halten oder auch ein Führen eines Kabelabschnitts erlaubt. Das Kabel-Aufnahmeteil 50, wie es die Ausführungsform der Haltevorrichtung 1 der Figur 1 zeigt, kann hülsenförmig oder rohrförmig gebildet sein. Das Kabel-Aufnahmeteil 50 kann auch anders geformt sein, z.B. als Ring, der innerhalb der Durchgangsöffnung 15 an der Durchgangsöffnung 15 und insbesondere am ersten Aufnahmeabschnitt 11 befestigt sein kann.

Die Anschlussvorrichtung 20 der erfindungsgemäßen Ausführungsformen der Haltevorrichtung 1 weist ein Adapterteil 40 auf, das an dem zweiten Aufnahmeabschnitt 12 des Haltergehäuses 10, z.B. einer Außenfläche, einer Randfläche oder einer Innenfläche desselben, fixiert oder befestigt ist, und an dem das Kopplungsstück 60 gehalten bzw. fixiert ist. Das Kopplungsstück 60 wird in einem erfindungsgemäß vorgesehenen Adapterteil 40 formschlüssig in diesem gehalten bzw. fixiert, z.B. durch eine entsprechende Vertiefung in einer Innenwand des Adapterteils 40, in der ein Abschnitt des Kopplungsstück 60 gelegen ist. Dazu alternativ oder zusätzlich kann das Kopplungsstück 60 in dem Adapterteil 40 einpresst sein, um das Kopplungsstück 60 in dem Adapterteil 40 zu fixieren.

Die Ausführungsform der Haltevorrichtung 1 nach der Figur 1 weist ein Adapterteil 40 auf, das im Bereich des zweiten Aufnahmeabschnitts 12 gelegen ist und die Form eines Hülsenabschnitts hat und hierin als Adapter-Aufnahmehülse 140 bezeichnet wird. An der Innenwandung der Adapter-Aufnahmehülse 140 ist das Kopplungsstück 60 gelegen und fixiert. Dessen Mittelachse verläuft in oder entlang der zweiten Bezugsachse B2. In den Figuren ist das Kopplungsstück 60 kugelförmig ausgebildet, jedoch kann dieses auch jede andere Gestalt und insbesondere jede andere hierin beschriebene Gestalt aufweisen. Die Adapter-Aufnahmehülse 140 der Ausführungsform der Haltevorrichtung 1 nach der Figur 1 ist in das Haltergehäuse 10 soweit eingeschoben, dass ein Endabschnitt der Adapter-Aufnahmehülse 140 an dem Kabel-Aufnahmeteil 50 anliegt.

Insbesondere kann das Kopplungsstück 60 mit jeglicher Form realisiert sein, die zumindest abschnittsweise einen gekrümmten Oberflächenabschnitt 62 aufweist, dessen Orientierung entlang der zweiten Bezugsachse B2 verläuft und der von der Kabelaufnahme-Öffnung 14 weg und von der Kabelaufnahme-Öffnung 14 aus gesehen über die Öffnung 33, oder deren in dieser Hinsicht äußeren Begrenzungsrand, hinausragt.

Die Haltevorrichtung 1 kann auch so realisiert sein, dass das Adapterteil 40, das z.B. zylinderförmig realisiert sein kann, an der Öffnung 33 mit einem Boden, also geschlossen realisiert ist, so dass das Kopplungsstück 60 nicht über das Haltergehäuse 10 hinausragt und auch nach außen abgedeckt ist. Das Haltergehäuse 10 kann statt der Öffnung 33 an dieser Stelle geschlossen ausgeführt sein, d.h. eine Abdeckung des Kopplungsstücks 60 aufweisen, und das Haltergehäuse 10 ansonsten nach einer hierin beschriebenen Ausführungsformen realisiert sein. In diesen Fällen ist das Material des Abschnitts des Adapterteils 40, der das Kopplungsstück 60 nach außen abdeckt, oder das Material des Haltergehäuses 10 derart realisiert, dass die von dem Kopplungsstück 60 bewirkte Magnetkraft durch diesen Abdeckungsabschnitt hindurchwirkt.

Die Ausführungsform der Haltevorrichtung 1 nach der Figur 4 weist ein Adapterteil 40 auf, das im Bereich des zweiten Aufnahmeabschnitts 12 gelegen und an dem Haltergehäuse 10 befestigt ist und die Form eines Rings hat und hierin als Adapter-Aufnahmering 240 bezeichnet wird. Nur ein Abschnitt des Aufnahmerings 240 ist an der Öffnung 33 in das Haltergehäuse 10 eingesetzt und z.B. mittels zumindest einem entsprechenden Gewinde in dieses eingeschraubt, so dass ein zweiter Abschnitt 242 von dem Haltergehäuse 10 absteht. Das Kopplungsstück 60 ist an dem Adapter-Aufnahmering 240 befestigt. In der Figur 4 ist zur Veranschaulichung einer möglichen Anwendung des erfindungsgemäßen Haltergehäuses 10 ein Magnet A2 dargestellt, der an einer Anwendungskomponente A befestigt sein kann.

Auch bei dieser Ausführungsform weist das Kopplungsstück 60 generell zumindest abschnittsweise einen gekrümmten Oberflächenabschnitt 62 auf, dessen Orientierung entlang der zweiten Bezugsachse B2 verläuft und der von der Kabelaufnahme-Öffnung 14 weg und von der Kabelaufnahme-Öffnung 14 aus gesehen über die Öffnung 33, oder deren in dieser Hinsicht äußeren Begrenzungsrand, hinaus ragt. Dabei ist die konvexe oder insbesondere sphärische Krümmung in einer Blickrichtung von der Anwendungskomponente aus gesehen geformt. Die konvexe Krümmung des Oberflächenabschnitts 62 ist insbesondere in einem Bereich ausgebildet, der vom Haltergehäuse 10 aus gesehen der entfernteste Bereich ist oder den entferntesten Punkt des Oberflächenabschnitts enthält. Dieser Bereich kann auch ein Umgebungsbereich des entferntesten Punkts des Oberflächenabschnitts sein.

Die Figur 6 zeigt zwei Kopplungszustände jeweils zwischen einer Haltevorrichtung 1 nach der Figur 4 und einer Anwendungskomponente A, die plattenförmig realisiert ist. An einer Oberfläche der Anwendungskomponente A sind mehrere Anwendungskomponenten-Oberflächenabschnitte A1 jeweils in Form einer konkaven und sphärischen Vertiefung ausgebildet. Von diesen unabhängig kann auch jeder geradflächige Oberflächenabschnitt der Anwendungskomponente A ein Anwendungskomponenten-Oberflächenabschnitt A1 sein. Auch könnte ein Anwendungskomponenten-Oberflächenabschnitt A1 als ein konvex gekrümmter Oberflächenabschnitt und insbesondere als eine Mantelfläche einer zylindrischen oder teilzylindrischen Ausformung oder als eine Kantenlinie z.B. einer teil-rhombischen Ausformung jeweils einer Anwendungskomponente A realisiert sein.

Die Ausführungsform der Haltevorrichtung 1 nach der Figur 5 weist ebenfalls ein Adapterteil 40 auf, das im Bereich des zweiten Aufnahmeabschnitts 12 gelegen und an dem Haltergehäuse 10 befestigt ist und die Form eines Rings hat und hierin als Adapter-Aufnahmerings 340 bezeichnet wird. Nur ein Abschnitt des Adapter-Aufnahmerings 340 ist an der Öffnung 33 in das Haltergehäuse 10 eingesetzt und z.B. mittels zumindest einem entsprechenden Gewinde in dieses eingeschraubt, so dass ein zweiter Abschnitt 342 von dem Haltergehäuse 10 absteht. Das Kopplungsstück 60 ist an dem Adapter-Aufnahmering 340 befestigt, der bei dieser Ausführungsform der Haltevorrichtung 1 zylindrisch geformt ist.

Die Figur 1 zeigt eine Kombination aus der Haltevorrichtung 1 und einer Anwendungskomponente A, die als Zwischenstück in Form eines Crimpflansch ausgeführt ist. Der Crimpflansch ist als Bügel oder Klammer ausgeführt und weist in einem zentralen Abschnitt ein Kopplungsteil A10 auf. Das Kopplungsteil A10 ist aus einem magnetischen Material wie z.B. ein aus einem geeigneten Stahl. Das Kopplungsteil A10 ist als zylindrisches Teil realisiert, wobei im Kopplungszustand eine ebene Rundfläche dem Kopplungsstück 60 zugewandt gelegen ist. Das Kopplungsteil A1 kann entfallen, insbesondere wenn zumindest der zentrale Abschnitt aus einem magnetischen Material gebildet ist.

Der Crimpflansch ist als Zwischenstück an einem Abschnitt einer weiteren Anwendungskomponente A11 anbringbar, indem der Crimpflansch außen an der weiteren Anwendungskomponente A11 befestigt und z.B. angeklemmt werden kann.

Die Figur 3 zeigt einen Crimpflansch als Anwendungskomponente A1 und einen Stellantrieb als eine weitere Anwendungskomponente A11, wobei der Crimpflansch an der Außenseite eines zylindrischen Außenflächen-Abschnitts der weiteren Anwendungskomponente A11 geklemmt und somit fixiert ist.

Die Figur 7 zeigt eine perspektivische Darstellung einer Kombination einer weiteren Ausführungsform der Anwendungskomponente A in Form einer Kontaktierungsvorrichtung 500 mit einem stiftförmigen Kontaktierungsteil 501 und der Ausführungsform des Kabelhalters 1 nach der Figur 1. Die Kontaktierungsvorrichtung 500 weist generell einen konvex gekrümmte Außenflächenabschnitt 501a und insbesondere das stiftförmige Kontaktierungsteil 501 und eine Fixierungsvorrichtung 502 auf, mit der die Kontaktierungsvorrichtung 500 an einer weiteren Anwendungskomponente A11 fixiert ist. Die Fixierungsvorrichtung 502 ist zur Fixierung der Kontaktierungsvorrichtung 500 an einer weiteren Anwendungskomponente A11 vorgesehen und kann, wie beispielartig in der Figur 7 dargestellt ist, insbesondere ein Befestigungsteil 505 und einen Verbindungsabschnitt 507 aufweisen, der das Befestigungsteil 505 und das stiftförmige Kontaktierungsteil 501 miteinander verbindet. Die Kontaktierungsvorrichtung 500 kann auch ohne Verbindungsabschnitt 507 realisiert sein. Das Befestigungsteil 505 ist bei der dargestellten Ausführungsform beispielartig als Platte ausgeführt. In diesem Fall kann das Befestigungsteil 505 an einer weiteren Anwendungskomponente A11 befestigt sein. Dabei kann das Befestigungsteil 505 beispielsweise durch Verbindungselemente oder durch andere Befestigungsarten an der weiteren Anwendungskomponente A11 befestigt sein. Das Befestigungsteil 505 kann auch stiftförmig oder stabförmig oder als Formschlussteil realisiert sein, so dass das Befestigungsteil 505 formschlüssig in eine entsprechend geformte Ausnehmung der weiteren Anwendungskomponente A11 eingesetzt und an dieser fixiert werden kann.

In der dargestellten Ausführungsform ist die weitere Anwendungskomponente A11 als eine Stellvorrichtung und speziell eine teleskopisch ausfahrbare Stellvorrichtung. Die weitere Anwendungskomponente A11 kann eine Befestigungsoberfläche A12 aufweisen.

Die Kontaktierungsvorrichtung 500 kann auch auf andere Weise realisiert sein. Diese weist vorzugsweise einen konvex gekrümmten Anwendungskomponenten-Oberflächenabschnitt A1 auf. Insbesondere kann die Anwendungskomponente A als ein gerader Stift oder als stiftförmiges Kontaktierungsteil 501 oder als Kontaktierungsteil 501 mit einem stiftförmigen Abschnitt geformt sein. In diesem Fall ist der Anwendungskomponenten-Oberflächenabschnitt A1 durch einen konvex gekrümmte Außenflächenabschnitt 501a in Form einer Zylinder-Mantelfläche realisiert. Kann auch das Kontaktierungsteil 501 als gekrümmter Stift realisiert sein. In diesen Fällen kann vorgesehen sein, dass nur ein Außenflächenabschnitt des Kontaktierungsteils 501 einen konvex gekrümmte Oberflächenabschnitt aufweist. Das Kontaktierungsteil 501 muss nicht stiftförmig oder mit einem stiftförmigen Abschnitt realisiert sein. Das Kontaktierungsteil 501 kann, je nach Anwendungsfall auch anders realisiert sein, z.B. zumindest in einem Abschnitt als Platte oder als ellipsoider oder kugelförmiger Körper oder als ein Abschnitt eines solchen jeweiligen Körpers, um eine konvex gekrümmten Anwendungskomponenten-Oberflächenabschnitt A1 bereitzustellen.

Durch die Bereitstellung eines konvex gekrümmten Anwendungskomponenten-Oberflächenabschnitts A1 einer Anwendungskomponente A kann das Ankoppeln einer Haltevorrichtung 1 nach einer erfindungsgemäßen Ausführungsform mit einer vorbestimmten Orientierung im Raum oder relativ zur Orientierung der Anwendungskomponente A erfolgen und zusätzlich im Kopplungszustand Freiheitsgrade der Bewegung und Drehung oder Freiheitsgrade der Bewegung oder Freiheitsgrade der Drehung bereitgestellt werden. Diese bereitgestellten Freiheitsgrade hängen insbesondere von der Form des Kopplungsstücks 60 der jeweiligen Ausführungsform der erfindungsgemäßen Haltevorrichtung 1 sowie der Form des konvex gekrümmten Anwendungskomponenten-Oberflächenabschnitts A1 ab. Auch kann bei der Ankopplung der Haltevorrichtung 1 an dem Kontaktierungsteils 501 eine vorbestimmte Orientierung der Haltevorrichtung 1 relativ zur Kontaktierungsvorrichtung 500 oder zum Anwendungskomponenten-Oberflächenabschnitt A1 im Kopplungszustand erreicht werden.

Bei diesen Realisierungen kann die Haltevorrichtung 1 nach einer der hierin beschriebenen Ausführungsformen oder Varianten derselben realisiert sein.

Nach einem weiteren Aspekt der Erfindung ist eine elektrische Anschlussvorrichtung C vorgesehen.

Eine Ausführungsform derselben ist in der Figur 8 dargestellt. Die Figur 8 zeigt eine perspektivische Darstellung einer Kombination der Ausführungsform der Anwendungskomponente A, die auch in der Figur 7 dargestellt ist und die als elektrische Kontaktierungsvorrichtung 500 mit einem stiftförmigen Kontaktierungsteil 501 und der Ausführungsform des Kabelhalters 1 nach der Figur 1 realisiert ist.

Zusätzlich ist das Kopplungsstück 60 sowie auch das Kontaktierungsteil 501 der Kontaktierungsvorrichtung 500 aus einem elektrisch leitfähigen Material gebildet. Zum elektrischen Anschluss eines Kabels K an das Kontaktierungsteil 501 steht ein Abschnitt einer elektrisch leitfähigen Ader des Kabels aus der Kabelhülle in dessen Längsrichtung heraus und liegt in der Durchgangsöffnung 15 des Haltergehäuses 15, wobei die Seitenwandung der Durchgangsöffnung 15 zumindest eine elektrische Kontaktierungsstellen aufweist, die über einen elektrischen Verbindungsabschnitt z.B. in Form eines Leiter-Abschnitts mit dem Kopplungsstück 60 in Kontakt steht. Das Kopplungsstück 60 und das Kontaktierungsteil 501 sind bei dieser Anwendung dabei elektrisch leitfähigem Material gebildet. Das Kontaktierungsteil 501 ist elektrisch mit einem elektrischen Funktionsbauteil oder einer Operationskomponente C1 verbunden. Die elektrische Operationskomponente C1 kann eine Stromanschluss-Vorrichtung sein. Auch kann die elektrische Operationskomponente C1 ein Ansteuerungsbauteil sein, mit der Signale, die von dem Kabel K über die Kontaktierungsvorrichtung 500 der Operationskomponente C1 zugeführt werden, verarbeitet werden und z.B. mit der Operationskomponente C1 zur Anzeige gebracht werden oder z.B. zur Ansteuerung der Anwendungskomponente A verwendet werden. In dem gezeigten Beispiel, bei dem die Anwendungskomponente A eine Stellvorrichtung ist, können die Signale zur Verstellung der Stellvorrichtung mittels dem Ansteuerungsbauteil verwendet werden.

Nach der Erfindung ist auch, wie in den Figuren 7 und 8 dargestellt, ein Stellantriebssystem S mit einem Stellantrieb S1 und einer Haltevorrichtung 1 vorgesehen. Die Haltevorrichtung 1 kann nach einer der hierin beschriebenen Ausführungsformen realisiert sein. Der Stellantrieb S1 weist einen konvex gekrümmten Außenflächenabschnitt 501a und insbesondere ein stiftförmiges Kontaktierungsteil 501 mit dem konvex gekrümmten Außenflächenabschnitt 501a auf, der ein hierin definierter Anwendungskomponenten-Oberflächenabschnitt A1 ist. An dem Anwendungskomponenten-Oberflächenabschnitt A1 in Form eines konvex gekrümmten Außenflächenabschnitts 501a liegt in dem Kopplungszustand das Kopplungsstück 60 an.

### Bezugszeichenliste:

- 1: Haltevorrichtung
- 10: Haltergehäuse
- 11: erster Aufnahmeabschnitt
- 12: zweiter Aufnahmeabschnitt
- 14: Kabelaufnahme-Öffnung
- 15: Durchgangsöffnung
- 20: Anschlussvorrichtung
- 31: seitliche Öffnung
- 32: seitliche Öffnung
- 33: Öffnung
- 40: Adapterteil
- 50: Kabel-Aufnahmeteil
- 60: Kopplungsstück
- 62: Oberflächenabschnitt
- 140: Aufnahmehülse
- 225: Verbindungselement
- 240: Adapter-Aufnahmering
- 242: zweiter Abschnitt
- 325: Verbindungselement
- 340: Adapter-Aufnahmering
- 342: zweiter Abschnitt
- 360: zylindrischer Körper
- 362: ebene Grundfläche des zylindrischen Körpers 360
- 500: Kontaktierungsvorrichtung
- 501: Kontaktierungsteil
- 501a: konvex gekrümmte Außenflächenabschnitt, insbesondere Zylinder-Mantelfläche
- 505: Befestigungsteil
- 507: Verbindungsabschnitt
- A: Anwendungskomponente
- A1: Anwendungskomponenten-Oberflächenabschnitt
- A2: Magnet
- A10: Kopplungsteil
- A11: weitere Anwendungskomponente
- B1: erste Bezugsachse
- B2: zweite Bezugsachse
- C: elektrische Anschlussvorrichtung
- C1: elektrische Operationskomponente
- K: zumindest ein Kabel
- S: Stellantriebssystem
- S1: Stellantrieb

## Patentansprüche

1. Haltevorrichtung (1) zum Halten zumindest eines Kabels (K), die Haltevorrichtung (1) aufweisend:
ein Haltergehäuse (10), das einen ersten Aufnahmeabschnitt (11) und einen zweiten Aufnahmeabschnitt (12) aufweist, wobei der erste Aufnahmeabschnitt (11) eine Kabelaufnahme-Öffnung (14) zur Aufnahme zumindest eines Abschnitts eines Kabels (K) aufweist, die als Durchgangsöffnung (15) des Haltergehäuses (10) realisiert ist und sich entlang einer ersten Bezugsachse (B1) der Haltevorrichtung (1) erstreckt, wobei der erste Aufnahmeabschnitt (11) und der zweite Aufnahmeabschnitt (12) in einer zweiten Bezugsachse (B2) der Haltevorrichtung (1), die die erste Bezugsachse (B1) schneidet, hintereinander gelegen sind,
eine Anschlussvorrichtung (20),
wobei das Kopplungsstück (60) zumindest abschnittsweise einen gekrümmten Oberflächenabschnitt (62) aufweist, dessen Orientierung entlang der zweiten Bezugsachse (B2) verläuft und der von der Kabelaufnahme-Öffnung (14) weg ragt, so dass der Oberflächenabschnitt (62) des Kopplungsstücks (60) im Kopplungszustand geeignet ist, einen Anwendungskomponenten-Oberflächenabschnitt (A1) der Anwendungskomponente (A) lösbar zu kontaktieren und in dem Kopplungszustand das Haltergehäuse (10) relativ zur Anwendungskomponente (A) zumindest um die zweite Bezugsachse (B2) drehbar zu koppeln, **dadurch gekennzeichnet,**
**dass** das Haltergehäuse (10) als Hohlkörper ausgebildet ist,
**dass** die Anschlussvorrichtung (20) ein Adapterteil (40), das an dem zweiten Aufnahmeabschnitt (12) fixiert oder befestigt ist, und ein Kopplungsstück (60) aus magnetischem Material aufweist, das in dem Adapterteil (40) formschlüssig fixiert ist oder in dieses eingepresst ist und das in einem Kopplungszustand die Haltevorrichtung (1) an eine Anwendungskomponente (A) koppelt, und
**dass** ein Oberflächenabschnitt (62) des Kopplungsstücks (60) in Richtung der zweiten Bezugsachse (B2) über das Haltergehäuse (10) herausragt und zumindest teilweise eine Außenfläche der Haltevorrichtung (1) ausbildet.

2. Haltevorrichtung (1) nach dem Anspruch 1, wobei die Haltevorrichtung (1) im Kopplungszustand zusätzlich entlang der Erstreckung des Anwendungskomponenten-Oberflächenabschnitts (A1) verschiebbar ist, so dass die Haltevorrichtung (1) entlang oder quer oder sowohl entlang als auch quer zu der ersten Bezugsachse (B1) bewegbar ist.

3. Haltevorrichtung (1) nach dem Anspruch 1 oder 2, wobei die Haltevorrichtung (1) im Kopplungszustand relativ zu dem Anwendungskomponenten-Oberflächenabschnitt (A1) kippbar ist.

4. Haltevorrichtung (1) nach einem der voranstehenden Ansprüche, wobei das Kopplungsstück (60) zumindest abschnittsweise als zylindrischer Körper (360) ausgebildet ist, wobei eine ebene Grundfläche des zylindrischen Körpers (360) eine Orientierung aufweist, die in oder entlang der Richtung der zweiten Bezugsachse (B2) gerichtet und von der Durchgangsöffnung (15) weg gerichtet ist.

5. Haltevorrichtung (1) nach einem der voranstehenden Ansprüche, wobei die Anschlussvorrichtung (20) ein Adapterteil (40) aufweist, das in eine Öffnung des Haltergehäuses (10), die in der Richtung der zweiten Bezugsachse (B2) von der Durchgangsöffnung weg gerichtet ist, eingesetzt ist, und durch welches das Kopplungsstück (60) in dem Haltergehäuse (10) gehalten ist.

6. Haltevorrichtung (1) nach dem Anspruch 5, wobei das Adapterteil (40) derart geformt ist, dass dieses eine formschlüssige Verbindung mit dem Kopplungsstück (60) realisiert.

7. Haltevorrichtung (1) nach einem der voranstehenden Ansprüche, wobei die Kabelaufnahme-Öffnung (14) als Durchgangsöffnung (15) realisiert ist, die derart ausgebildet ist, dass sich ein in dieses eingesetztes Kabel (K) relativ zum Haltergehäuse (10) in der ersten Bezugsachse (B1) bewegen kann oder eine Drehung um die erste Bezugsachse (B1) ausführen kann.

8. Haltevorrichtung (1) nach einem der voranstehenden Ansprüche, wobei in der Kabelaufnahme-Öffnung (14) des Haltergehäuses (10) ein Kabel-Aufnahmeteil (50) zur Aufnahme zumindest eines Kabels (K) angeordnet ist.

9. Kombination aus einer Haltevorrichtung (1) nach einem der voranstehenden Ansprüche und einer Anwendungskomponente (A), wobei in einem Kopplungszustand das Kopplungsstück (60) an einem Anwendungskomponenten-Oberflächenabschnitt (A1) der Anwendungskomponente (A) anliegt und das Kopplungsstück (60) der Haltevorrichtung (1) und die Anwendungskomponente (A) durch eine magnetische Anziehungskraft angezogen werden und gekoppelt sind.

10. Kombination nach dem Anspruch 9, wobei die Anwendungskomponente (A) eine konkave Vertiefung aufweist, in der das Kopplungsstück (60) teilweise gelegen ist.

11. Kombination nach dem Anspruch 9, wobei der Anwendungskomponenten-Oberflächenabschnitt (A1) der Anwendungskomponente (A) eine konvex gekrümmte Außenfläche aufweist.

12. Kombination nach dem Anspruch 11, wobei die Anwendungskomponente (A) einen stiftförmigen Abschnitt mit einer konvex gekrümmten Außenfläche aufweist, die der Anwendungskomponenten-Oberflächenabschnitt (A1) ist, an dem das Kopplungsstück (60) anliegt.

13. Kombination nach einem der Ansprüche 9 bis 12, wobei die Anwendungskomponente (A) ein Crimpflansch ist.

14. Elektrische Anschlussvorrichtung (C) zum elektrischen Anschließen eines Kabels (K) mit einer Haltevorrichtung (1) nach einem der Ansprüche 1 bis 10 und einer Anwendungskomponente (A), die als elektrische Kontaktierungsvorrichtung (500) aus einem elektrisch leitfähigen Material ausgebildet ist,
wobei das Kopplungsstück (60) aus elektrisch leitfähigem Material gebildet ist,
wobei in einem Kopplungszustand das Kopplungsstück (60) an einem Anwendungskomponenten-Oberflächenabschnitt (A1) der Anwendungskomponente (A) anliegt und das Kopplungsstück (60) der Haltevorrichtung (1) und die Anwendungskomponente (A) durch eine magnetische Anziehungskraft angezogen werden und gekoppelt sind,
wobei das Kopplungsstück (60) an einem Anwendungskomponenten-Oberflächenabschnitt (A1) der elektrischen Kontaktierungsvorrichtung (500) anliegt und Haltevorrichtung (1) und die Anwendungskomponente (A) durch eine magnetische Anziehungskraft angezogen werden und gekoppelt sind.

15. Stellantriebssystem (S) mit einem Stellantrieb (S1) und mit einer Haltevorrichtung (1) nach einem der Ansprüche 1 bis 8,
wobei der Stellantrieb (S1) ein stiftförmiges Kontaktierungsteil (501) mit einem konvex gekrümmten Außenflächenabschnitt (501a) aufweist, das Anwendungskomponenten-Oberflächenabschnitt (A1) ist, an dem in dem Kopplungszustand das Kopplungsstück (60) anliegt.

## Claims

1. Holding device (1) for holding at least one cable (K), comprising the holding device (1):
a holder housing (10), which comprises a first receiving section (11) and a second first receiving section (12), wherein the first receiving section (11) comprises a cable-receiving opening (14) for receiving at least a section of a cable (K), which is realized as through opening (15) and extends along a first reference axis (B1) of the holding device (1), wherein the first receiving section (11) and the second receiving section (12) are arranged one behind the other in a second reference axis (B2) intersecting the first reference axis (B1),
a connection device (20),
wherein the coupling piece (60) comprises a curved surface portion (62) at least in a section, the orientation of which extends along the second reference axis (B2) and which projects away from the cable-receiving opening (14) so that the surface portion (62) of the coupling piece (60) is suitable in the coupling state to detachably contact an application component surface section (A1) of the application component (A) and, in the coupling state, to rotatably couple the holder housing (10) relative to the application component (A) at least about the second reference axis (B2), **characterized**
**in that** the holder housing (10) is designed as a hollow body,
that the connection device (20) comprises an adapter part (40) that is fixed or fastened to the second receiving section (12) and a coupling piece (60) made of magnetic material that is positively fixed in or pressed into the adapter part (40) and that, in a coupling state, couples the holding device (1) to an application component (A), and
that a surface section (62) of the coupling piece (60) projects beyond the holder housing (10) in the direction of the second reference axis (B2) and forms at least a partial outer surface of the holding device (1).

2. Holding device (1) according to claim 1, wherein the holding device (1) in the coupling state is additionally displaceable along the extension of the application component surface portion (A1), so that the holding device (1) is movable along or transversely or both along and transversely to the first reference axis (B1).

3. The holding device (1) according to claim 1 or 2, wherein the holding device (1) is tiltable relative to the application component surface portion (A1) in the coupling state.

4. Holding device (1) according to one of the preceding claims, wherein the coupling piece (60) is formed at least in a section as a cylindrical body (360), wherein a planar base surface of the cylindrical body (360) comprises an orientation which is directed in or along the direction of the second reference axis (B2) and is directed away from the through opening (15).

5. Holding device (1) according to one of the preceding claims, wherein the connection device (20) comprises an adapter part (40) which is inserted into an opening of the holder housing (10), which is directed away from the through opening in the direction of the second reference axis (B2), wherein by means of the adapter part (40) the coupling piece (60) is held in the holder housing (10).

6. Holding device (1) according to claim 5, wherein the adapter part (40) is shaped in such a way that it realizes a positive connection with the coupling piece (60).

7. Holding device (1) according to one of the preceding claims, wherein the cable-receiving opening (14) is realized as a through opening (15), which is designed such that a cable (K) inserted therein can move relative to the holder housing (10) in the first reference axis (B1) or can perform a rotation about the first reference axis (B1).

8. Holding device (1) according to one of the preceding claims, wherein a cable-receiving part (50) for receiving at least one cable (K) is arranged in the cable-receiving opening (14) of the holder housing (10).

9. Combination of a holding device (1) according to any one of the preceding claims and an application component (A), wherein in a coupling state the coupling piece (60) abuts against an application component surface portion (A1) of the application component (A), and wherein the coupling piece (60) of the holding device (1) and the application component (A) are attracted by a magnetic attraction force and are coupled.

10. Combination according to claim 9, wherein the application component (A) comprises a concave recess in which the coupling piece (60) is partially located.

11. The combination according to claim 9, wherein the application component surface portion (A1) of the application component (A) comprises a convexly curved outer surface.

12. The combination according to claim 11, wherein the application component (A) comprises a pin-shaped portion having a convexly curved outer surface, which is the application component surface portion (A1), wherein the pin-shaped portion abuts against which the coupling piece (60).

13. Combination according to any one of claims 9 to 12, wherein the application component (A) is a crimp flange.

14. Electrical connection device (C) for electrically connecting a cable (K) with a holding device (1) according to one of claims 1 to 10 and an application component (A), which is designed as an electrical contacting device (500) made of an electrically conductive material,
wherein the coupling piece (60) is formed from electrically conductive material,
wherein, in a coupling state, the coupling piece (60) abuts against an application component surface portion (A1) of the application component (A), and wherein the coupling piece (60) of the holding device (1) and the application component (A) are attracted and coupled by a magnetic attraction force,
wherein the coupling piece (60) abuts against an application component surface portion (A1) of the electrical contacting device (500), and wherein the holding device (1) and the application component (A) are attracted and coupled by a magnetic attraction force.

15. Actuator system (S) with an actuator (S1) and with a holding device (1) according to one of claims 1 to 8,
wherein the actuator (S1) comprises a pin-shaped contacting member (501) with a convexly curved outer surface portion (501a) which is the application component surface portion (A1), against which the coupling member (60) abuts in the coupling state.

## Revendications

1. Dispositif de retenue (1) pour tenir au moins un câble (K) qui est muni du dispositif de retenue (1), présentant :
un boîtier de support (10) comportant une première section de réception (11) et une seconde section de réception (12) ; la première section de réception (11) comporte une ouverture de réception de câble (14) permettant de recevoir au moins une section d'un câble (K) qui est réalisée sous forme d'une comme ouverture de passage (15) du boîtier de support (10) et s'étend le long d'un premier axe de référence (B1) du dispositif de retenue (1), la première section de support (11) et la seconde section de support (12) étant situées l'une derrière l'autre dans un second axe de référence (B2) du dispositif de retenue (1) qui coupe le premier axe de référence (B1),
un dispositif de raccordement (20),
la pièce de couplage (60) présentant au moins une section de surface incurvée (62), dont l'orientation passe le long du second axe de référence (B2) et qui dépasse de l'ouverture de réception de câble (14), de sorte que la section de surface (62) de l'unité de couplage (60) convient est apte, en état de couplage, à venir en contact de manière dissociable avec une section de surface de composant d'application (A1) du composant d'application (A) et, en état de couplage, à coupler avec possibilité de rotation le boîtier de support (10) par rapport au composant d'application (A), au moins autour du second axe de référence (B2),
le boîtier de support (10) étant conçu comme un corps creux,
le dispositif de raccordement (20) comportant une pièce d'adaptateur (40) fixée ou rattachée à la seconde section de réception (12) et une pièce de couplage (60) en matériau magnétique qui est fixée à dans la partie d'adaptateur (40) par correspondance géométrique ou enfoncée dans celle-ci et qui, en état de couplage, accouple le dispositif de retenue (1) à un composant d'application (A) ; et
une section de surface (62) de la pièce de couplage (60) dépassant du boîtier de support (10) en direction du second axe de référence (B2) et formant au moins partiellement une surface extérieure du dispositif de retenue (1).

2. Dispositif de retenue (1) selon la revendication 1, dans lequel le dispositif de retenue (1) peut également être déplacé le long de l'extension de la section de surface du composant d'application (A1), de sorte que le dispositif de retenue (1) puisse être déplacé longitudinalement et/ou transversalement ou aussi bien longitudinalement que transversalement par rapport au premier axe de référence (B1).

3. Dispositif de retenue (1) selon la revendication 1 ou 2, dans lequel le dispositif de retenue (1) peut être basculé en mode de couplage par rapport à la section de surface du composant d'application (A1).

4. Dispositif de retenue (1) selon l'une des revendications précédentes, la pièce de couplage (60) étant réalisée au moins par sections sous forme d'un corps cylindrique (360), une surface plane du corps cylindrique (360) ayant une orientation dirigée dans la direction ou le long de la direction du second axe de référence (B2) et détournée de l'ouverture de passage (15).

5. Dispositif de retenue (1) selon l'une des revendications précédentes, dans lequel le dispositif de raccordement (20) est muni d'une pièce d'adaptateur (40) qui est insérée dans une ouverture du boîtier de support (10) qui est dirigée dans le sens du second axe de référence (B2) en étant détournée de l'ouverture de passage et par laquelle la pièce de couplage (60) est maintenue dans le boîtier de support (10).

6. Dispositif de retenue (1) selon la revendication 5, dans lequel la pièce d'adaptateur (40) est conformée de telle sorte qu'elle établisse une liaison par correspondance géométrique avec la pièce de couplage (60).

7. Dispositif de retenue (1) selon l'une des revendications précédentes, l'ouverture de réception de câble (14) étant réalisée sous forme d'une ouverture de passage (15), qui est conçue de telle sorte qu'un câble (K) inséré dans celle-ci puisse se déplacer dans le premier axe de référence (B1) par rapport au boîtier de support (10) ou effectuer une rotation autour du premier axe de référence (B1).

8. Dispositif de retenue (1) selon l'une des revendications précédentes, dans lequel une pièce de réception de câble (50) destinée à recevoir au moins un câble (K) est disposée dans l'ouverture de réception (14) du boîtier de support (10).

9. Combinaison d'un dispositif de retenue (1) selon l'une des revendications ci-dessus et d'un composant d'application (A), dans laquelle, en état de couplage, la pièce de couplage (60) repose sur une section de surface de composant d'application (A1) du composant d'application (A) et la pièce de couplage (60) du dispositif de retenue (1) et le composant d'application (A) sont attirés et couplés par une force d'attraction magnétique.

10. Combinaison selon la revendication 9, dans laquelle le composant d'application (A) présente un creux concave dans lequel la pièce de couplage (60) est partiellement posée.

11. Combinaison selon la revendication 9, dans laquelle a section de surface de composant d'application (A1) du composant d'application (A) présente une surface extérieure convexe incurvée.

12. Combinaison selon la revendication 11, dans laquelle le composant d'application (A) comporte une section en forme de broche avec une surface extérieure convexe incurvée, qui est la section de surface du composant d'application (A1) sur laquelle la pièce de couplage (60) repose.

13. Combinaison selon l'une des revendications 9 à 12, dans laquelle le composant d'application (A) est une bride à sertir.

14. Dispositif de raccordement électrique (C) pour la connexion électrique d'un câble (K) avec un dispositif de retenue (1) selon l'une des revendications 1 à 10 et un composant d'application (A) conçu comme dispositif de contact électrique (500) en matériau conducteur électrique ;
dans lequel la pièce de couplage (60) est faite de matériau conducteur électrique,
en état de couplage, la pièce de couplage (60) repose sur une surface de composant d'application (A1) du composant d'application (A) et la pièce de couplage (60) du dispositif de retenue (1) et le composant d'application (A) sont attirés et couplés par une force d'attraction magnétique,
la pièce de couplage (60) repose sur une section de surface de composant d'application (A1) du dispositif de mise en contact électrique (500) et le dispositif de retenue (1) et le composant d'application (A) sont attirés et couplés par une force d'attraction magnétique.

15. Système d'actionneur (S) avec un actionneur (S1) et un dispositif de retenue (1) selon l'une des revendications 1 à 8 ;
dans lequel l'actionneur (S1) comporte une pièce de contact en forme de broche (501) avec une section de surface extérieure convexe incurvée (501a), qui est la section de surface du composant d'application (A1) sur laquelle la pièce de couplage (60) repose en état de couplage.
